Europäisches Patentamt

European Patent Office

Office européen des brevets

(19)

(11) **EP 1 466 764 A1**

(12) ## EUROPEAN PATENT APPLICATION

(43) Date of publication:
**13.10.2004 Bulletin 2004/42**

(51) Int Cl.[7]: **B60H 1/00**

(21) Application number: **03100958.2**

(22) Date of filing: **10.04.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Delphi Technologies, Inc.
Troy, MI 48007 (US)**

(72) Inventor: **Quilliard, Julien
57000, Metz (FR)**

(74) Representative: **Beissel, Jean et al
Office Ernest T. Freylinger S.A.,
234, route d'Arlon,
B.P. 48
8001 Strassen (LU)**

(54) **Method and device for controlling the air discharge temperature of an HVAC system**

(57)    The invention relates to a method for controlling the air discharge temperature of an HVAC system which comprises means for controlling air flows. According to the invention, the method is characterised by the following steps:

calculating air flows and pressures inside the HVAC system based on discharge temperature targets and a physical model of the HVAC system and

actuating the means for controlling air flows based on the results of the calculation of air flows and pressures in order to control the air discharge temperature of the HVAC system.

Fig. 1

Printed by Jouve, 75001 PARIS (FR)

**Description**

*FIELD OF THE INVENTION*

The present invention generally relates to a method and a device for controlling the air discharge temperature of an HVAC system. Especially, the present invention relates to automotive HVAC systems.

*BACKGROUND OF THE INVENTION*

It is a fundamental goal of an automotive heating, ventilation, and air conditioning (HVAC) system to provide an adjustable air flow and discharge temperature in a cabin of a vehicle in order to make vehicle occupants comfortable. A typical HVAC system comprises an HVAC module in the form of a casing which includes an evaporator for cooling air and an heater-core for heating air. The HVAC module generates a cold and an hot air flow which are mixed and discharged into the vehicles cabin through air ducts connected to air nozzles in the passenger compartment. The HVAC system varies the discharge temperature by controlling the amount of the air flowing through the evaporator and the heater-core and the mixing ratio of the cold and hot air flows.

HVAC systems use means for controlling the hot and cold air flows, such as valves, pivotable flaps, or blend doors. By controlling the positions of the means the restrictions in the cold and in the hot air flow channels of the ducts of the HVAC system can be controlled. For instance, increasing the restriction in a hot air flow channel will reduce the proportion of hot air flow in the total air flow in a duct and, therefore, will decrease the discharge temperature of this duct. Hence, varying the positions of the means leads to a change in the discharge temperature.

In automatic HVAC systems, the means for controlling the hot and cold air flows are actuated using electrical actuators controlled by an electronic controller. These systems make it possible for occupants of the vehicle or for an automatic comfort control system to set the discharge temperature target in order to maintain the vehicles interior comfort conditions. In such a case, the control system of an HVAC system calculates the positions of the means which lead to the targeted discharge temperature. Typically, a closed-loop algorithm using discharge temperature sensors placed in ducts of the HVAC system calculates the positions.

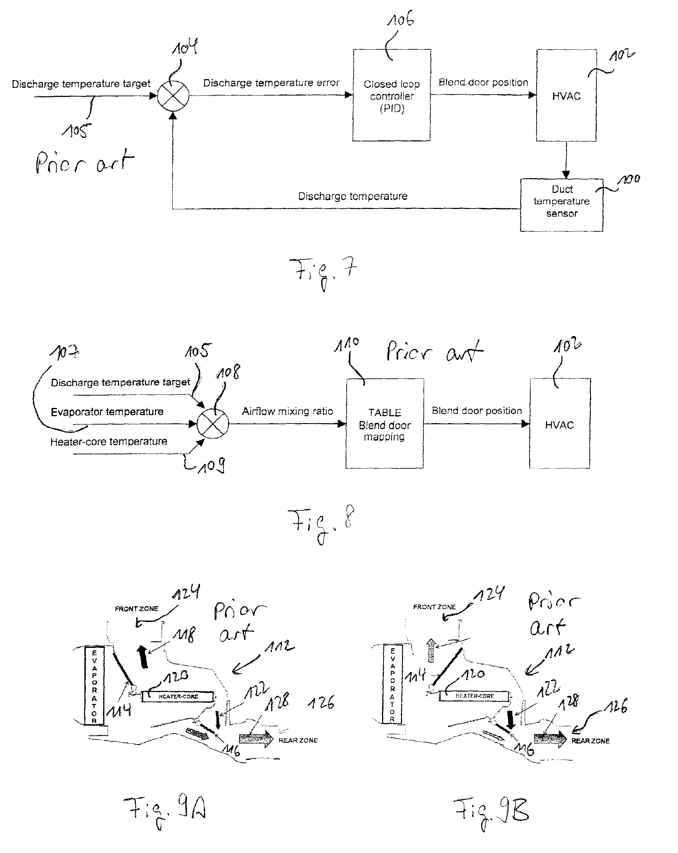

Fig. 7 shows a prior art system for controlling an HVAC module 102 of an HVAC system. The system applies a closed-loop algorithm and comprises a temperature sensor 100 which is placed in a duct of the HVAC system and measures the discharge temperature. The measured discharge temperature is compared with a discharge temperature target 105 by a comparison element 104. A discharge temperature error resulting from the comparison is supplied to a closed loop controller 106 employing a PID control algorithm. The controller 106 sets a valve or blend door positioned in the duct using a closed-loop algorithm. This closed loop algorithm using duct sensors reliably controls the temperature in single zone and multi-zones HVAC systems, but it requires several sensors. Thus, the overall cost of the HVAC system is increased. This cost increase is significant on multi-zones HVAC systems, as the number of ducts increases with the number of zones and, therefore, many sensors have to be employed.

Another solution is to use an open-loop control of a valve or blend door position by mapping an air flow mixing ratio in function of the valve or blend door position, respectively. Fig. 8 shows a system which comprises a processing element 108 which processes the discharge temperature target 105, the evaporator temperature 107, and the heater-core temperature 109. The processing element 108 calculates an air flow mixing ratio depending on received values which is mapped to a respective valve or blend door position by a table 110. The resulting valve or blend door position is supplied as a control signal to a valve or blend door of the HVAC module 102.

According to a further solution, the air discharge temperature can be estimated based on a valve or blend door position, the temperature of the heat exchangers, and the speed of a blower of the HVAC system, as disclosed in U.S. Patent No. 5,937,940. This solution operates without any discharge temperature sensor. However, in multi-zones HVAC systems the discharge temperature in one zone depends not only on the valve position and the blower speed, but also on the discharge temperature and the air flow distribution of other zones. Since all ducts of the HVAC system are connected to common heat exchangers, particularly to a heater-core and evaporator, a change of air flow in one zone will impact the air flow in the other zones and as a consequence will affect the discharge temperature of all zones.

In the following, this effect is briefly explained in connection with Fig. 9A and Fig. 9B. Both Figs. show a dual zone HVAC module 112 with two blend doors 114 and 116. The front blend door 114 controls the front discharge temperature and the rear blend door 116 controls the rear discharge temperature. In Fig. 9A, the front blend door 114 is positioned so that a front air flow 118 flows through a heater-core 120 to a front zone 124 of the HVAC module 112. The rear blend door 116 is in an intermediate position so that only a small amount 122 of a rear air flow 128 goes through the heater-core 120 to a rear zone 126 of the HVAC module 112. As a consequence, the temperature of the rear air flow 122 is relatively low. In Fig. 9B the position of the rear blend door 116 has not changed. However, the front blend door 114 is in such a position that the front air flow 118 does not flow through the heater-core 120. This change of position of the front blend door 114 also alters the pressure balance in the HVAC module 112, especially in its ducts. The altered pressure balance impacts the mixing ratio of the rear air flow 128 and causes a temperature increase in the rear air flow 128, although the position of the rear blend door 2 is not changed. This example demonstrates how a change in one zone, i.e., in the front zone 124, of the HVAC module 112 modifies the discharge temperature of another zone, i.e., the rear zone 126, even if the blend door position of the rear zone 126 and a blower speed did not change.

Applying a classical mapping solution, as disclosed in U.S. Patent No. 5,937,940, on such multi-zones HVAC systems would require the mapping of the discharge temperature in each zone for all possible combinations of air flow distribution and temperature of other zones. Thus, what is achievable on a single zone system would require a huge amount of data to calibrate a three or four zones HVAC system. Collecting those data would significantly increase the cost of development of such a control system.

## *OBJECT OF THE INVENTION*

It is an object of the present invention to provide a method and a device for controlling the air discharge temperature of an HVAC system, which predict the adjustment of means for controlling the air flows inside the HVAC system. This object is achieved by a method for controlling the air discharge temperature of an HVAC system as claimed in claim 1 and a device for controlling the air discharge temperature of an HVAC system as claimed in claim 9.

## *SUMMARY OF THE INVENTION*

The present invention relates to a method and a device for controlling the air discharge temperature of an HVAC system. In particular, the invention relates to a method and a device for controlling the air discharge temperature of an automotive multi-zones HVAC system that uses a physics based model of the HVAC system. The HVAC system comprises means for controlling air flows, such as flaps, blend doors, or valves.

According to the invention, the method comprises the following steps:

calculating air flows and pressures inside the HVAC system based on discharge temperature targets and a physical model of the HVAC system and

actuating the means for controlling air flows based on the results of the calculation of air flows and pressures in order to control the air discharge temperature of the HVAC system.

The advantage of the present invention is to provide a method to control the air discharge temperature which does not require the usage of duct sensors. Furthermore, the method can solve the temperature control complexity on HVAC systems comprising multiple zones at lower costs, particularly material and development costs, compared to the prior art methods. Also, the method according to the invention requires less tests and calibrations than the methods known in the prior art. Finally, the method according to the invention is more reliable, since it does not employ duct sensors, harness, and electrical connections of duct sensors.

In a preferred embodiment, the calculation of the air flows and pressures inside the HVAC system comprises the following steps:

calculating air flow targets from the discharge temperature targets for each zone of the HVAC system by using a temperature-air flow model of a heat exchange of the HVAC system;

calculating restriction coefficients from the air flow targets by using a pressure-air flow model of the HVAC system; and

calculating positions of the means for controlling air flows from the restriction coefficients.

In a preferred embodiment, a physical model, which can be implemented with small expenditure, is used for the calculation of the air flow targets from discharge temperature targets. According to this model, the step of calculating air flow targets from discharge temperature targets comprises the calculation of the amount of a hot and cold air flow through hot and cold channels of each zone.

According to a more preferred embodiment, it should be possible to perform the calculation of the amount of the hot and cold air flow through hot and cold channels of each zone with computing power provided by a standard micro-controller for usage in automotive applications. To achieve this, the model can be implemented in that hot air flow Q_hot through a hot channel and the cold air flow Q_cold through a cold channel of a zone of the HVAC system are calculated by the following equations:

$$Q\_hot = (Q\_mixed*T\_mixed - Q\_mixed*T\_cold)/(T\_hot - T\_cold)$$

$$Q\_cold = Q\_mixed - Q\_hot$$

wherein Q_mixed is the total air flow provided for the zone, T_hot is the temperature of an heater core of the HVAC system, T_cold is the temperature of an evaporator of the HVAC system, and T_mixed is an air discharge temperature target.

The pressure-air flow model can be implemented based on Bernoulli's theorem. Therefore, in the pressure-air flow model air spaces distributed in the HVAC system are represented by pressures P separated by air flow restrictions R. Then, the pressure-air flow model can be defined by a system of equations which link pressures P with the air flow restrictions R, wherein each equation is of the following type: $\Delta P = R*Q^2$, wherein Q is a total air flow through a restriction R.

The advantage of this embodiment is that the system of the above equations requires relatively small computing power. Therefore, standard microprocessing elements can be used to solve the system of equations.

Particularly, the system of equations defining the pressure-air flow model of the HVAC system is solved using a recursive algorithm, particularly a dichotomy algorithm.

In a further preferred embodiment, the positions of the means for controlling air flows are calculated from the restriction coefficients according to a predefined relation between a restriction coefficient and a position for each one of the means. The predefined relation has the advantage that it does not require the solving of equations. For example, it can be implemented by a look-up table, stored in a memory element of the HVAC system.

According to a further aspect of the invention, a device for controlling the air discharge temperature of an HVAC system, which comprises means for controlling air flows, is provided. The device is adapted to implement the method according to invention and comprises heat exchange model means adapted to generate air flow target signals by calculating air flows and pressures inside the HVAC system based on discharge temperature targets signals and a physical model of the HVAC system. Further, the device comprises air flow model means adapted to generate control signals based on the air flow target signals received from the heat exchange model means. The control signals actuate the means for controlling air flows in order to control the air discharge temperature of the HVAC system.

In a first preferred embodiment, the device comprises memory means storing a computer program adapted to implement the heat exchange model means and the air flow model means and processing means. The processing means are adapted to execute the computer program, to process the discharge temperature targets signals, and to generate the control signals. When the memory means can be re-programmed, the computer program can easily be updated. Also, it is possible to replace the memory means in order to update the computer program. Such an implementation is very flexible.

In a second preferred embodiment, the device comprises a hard-wired logic adapted to implement the heat exchange model means and the air flow model means, to process the discharge temperature targets signals, and to generate the control signals.

The computer program or the hard-wired logic preferably comprise a table or function which contain a predefined relation between a restriction coefficient and a position for each one of the means for controlling air flows.

### *BRIEF DESCRITPION OF THE DRAWINGS*

The present invention will now be described, by way of example, with reference to the accompanying drawings, in which:

Fig. 1 shows a block diagram of a model based control device for controlling an HVAC module and the air discharge temperature of an HVAC system according to the invention;

Fig. 2 shows a physical model on which a method for controlling the air discharge temperature of a tri-zone HVAC system in accordance with the invention is based;

Fig. 3 shows a pressure and air flow model of a tri-zone HVAC system in accordance with the invention using Bond-graph representation;

Fig. 4 shows a temperature model of a duct comprising a adjustable blend door of an HVAC system;

Fig. 5 shows a graph representing the relation between hot and cold restriction coefficients of a blend door;

Fig. 6 shows a graph representing the relation between a blend door position and a restriction coefficient;

Fig. 7 shows a prior art HVAC system with a closed loop blend door position control;

Fig. 8 shows a prior art HVAC system with a open loop blend door position control;

Fig. 9A and 9B show a prior art dual-zone HVAC system in order to demonstrate the dependencies of the air flows in the system.

### *DETAILED DESCRIPTION OF PREFERRED EMBODIMENTS*

Preferred embodiments of a device and a method for controlling the air discharge temperature of an HVAC system in accordance with the invention will now be described. In the present embodiments, the method and the device are implemented for an automotive HVAC system with three zones (tri-zone HVAC system).

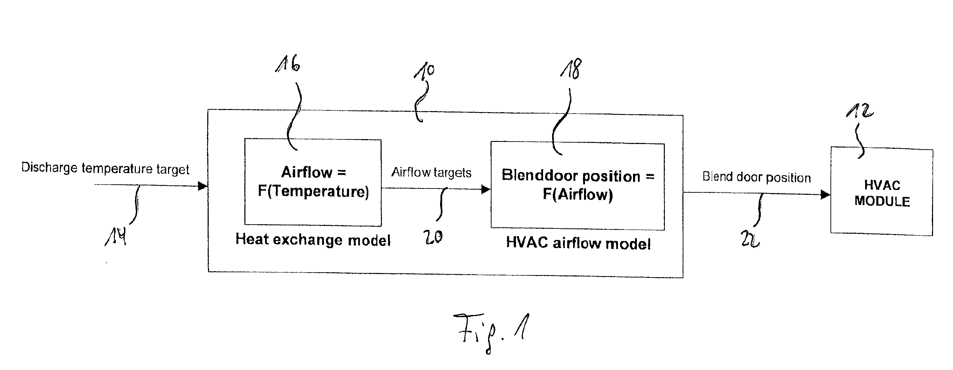

Fig. 1 shows a block diagram of a model based control device 10 for controlling an HVAC module 12. The control device 10 and the module 12 are parts of an automotive HVAC system. The model based control device 10 receives a discharge temperature target 14 set by occupants of a vehicle, which includes the HVAC system, or an automatic comfort control system. The control device 10 comprises an heat exchange model 16 and an HVAC air flow model 18. Both models 16 and 18 are implemented in software, which is processed by a microprocessor or microcontroller. The heat exchange model 16 calculates air flow targets 20 from the discharge temperature target 14 based on temperature-air flow model data of an heat exchange of the HVAC system. The calculated air flow targets 20 are processed by the HVAC air flow model 18 in that it calculates a blend door position 22 from the supplied air flow targets 20 based on pressure and air flow model data of the HVAC system. Then, the HVAC module 12 is provided with the calculated blend door position 22 in order to adjust the blend door for controlling the air discharge temperature of the HVAC system. The blend door serves as a means for controlling an air flow in the HVAC system.

Briefly summarized, the method implemented by the models 16 and 18 of the control device 10 of Fig. 1 includes the steps of:

(1) Calculating air flow targets for each zone of the HVAC system from the discharge temperature targets by using a temperature-air flow model of the heat exchange.

(2) Calculating restriction coefficients from the air flow targets by using a pressure-air flow model of the HVAC module.

(3) Transferring the restriction coefficients in blend door positions.

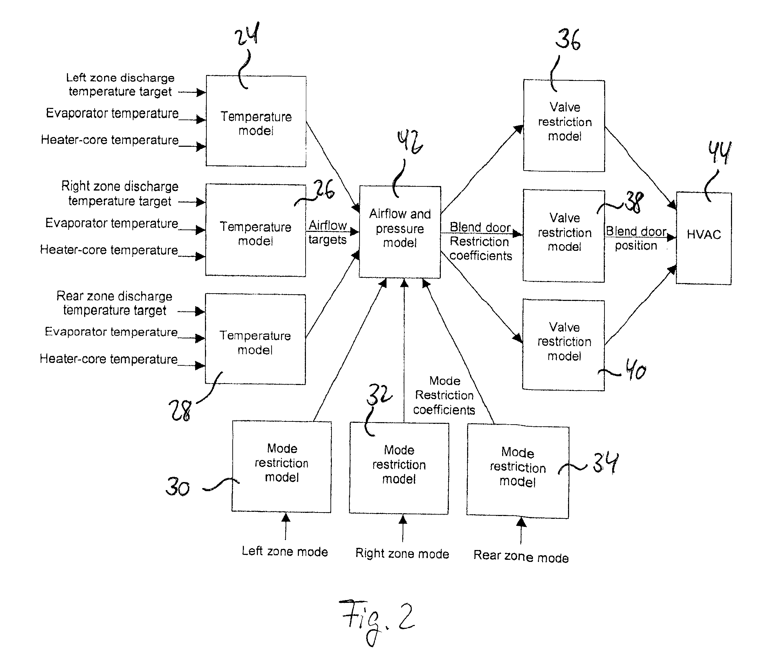

Fig. 2 shows a physical model as it is implemented in the model based control device 10 in detail. The physical model is used in a tri-zone HVAC system, which comprises a left, right, and rear zone. Each zone comprises at least one blend door or any other means to control the air flow through heat exchangers of the HVAC system. Each of the blend doors or means is actuated and can be controlled by a control system, which comprises an electronic controller. Further, the HVAC system includes an heater-core and an evaporator or any other means to heat or to refresh the air flowing through the heater-core or evaporator, respectively. Moreover, the HVAC system can include mode position feedback to the control system, re-circulation position feedback and blower speed feedback.

The physical model of Fig. 2 is based on a blend door open loop position control of the tri-zone HVAC system. The model comprises temperature models 24, 26, and 28, mode restriction models 30, 32, and 34, valve restriction models 36, 38, and 40 for the left, right, and rear zone, respectively. The core component of the physical model is formed by an air flow and pressure model 42. Each temperature model 24, 26, and 28 is supplied with the evaporator temperature and the heater-core temperature, measured with temperature sensors located at the evaporator and heater-core. Further, each temperature model 24, 26, and 28 is provided with a left, right, or rear zone discharge temperature target, respectively. These targets are set by occupants of a vehicle or an automatic comfort control system.

The temperature models 24, 26, and 28 calculate air flow targets for each zone. Each of the mode restriction models 30, 32, and 34 is provided with a left, right, and rear zone mode, respectively. The mode restriction models 30, 32, and 34 calculate mode restriction coefficients for each zone. The air flow and pressure model 42 processes the air flow targets and the mode restrictions coefficients in that it calculates from the supplied values blend door restriction coefficients for each zone. The three calculated blend door restriction coefficients (one for the left, one for the right, and one for the third zone) are then processed by the respective valve restriction models 36, 38, and 40 in that with each coefficient a respective blend door position is calculated. The blend door position serves to adjust a respective blend door of an HVAC module 44 of the tri-zone HVAC system.

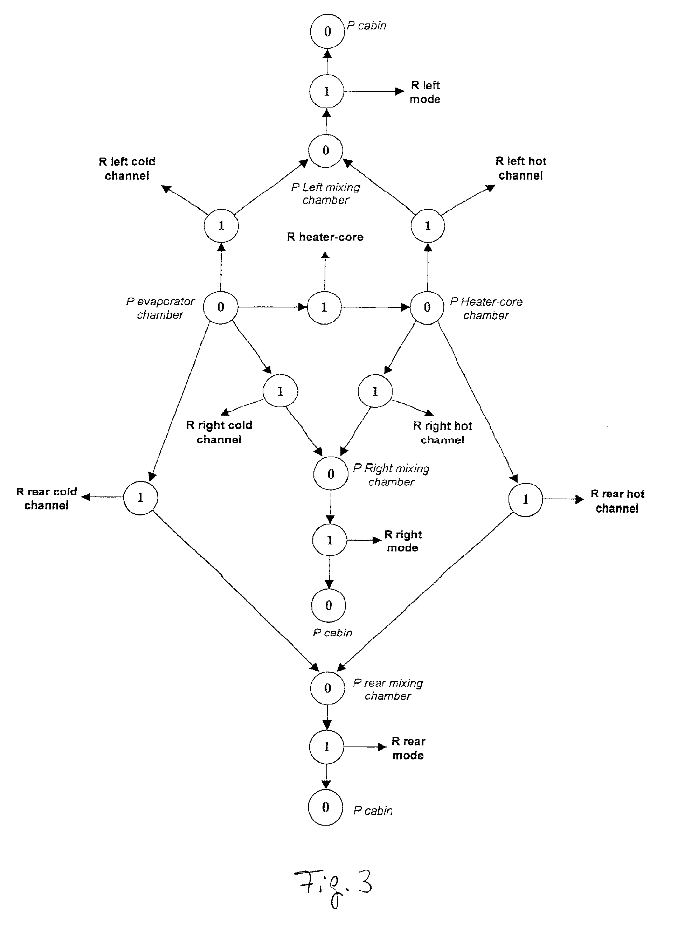

The function of the heat exchange model 16 (Fig. 1) and of the temperature models 24, 26, and 28 (Fig. 2) will now be discussed in detail. The calculation of the discharge temperature targets is explained with reference to Fig. 4, which shows a temperature model of a duct 46 comprising an adjustable blend door 48 of an HVAC system. The duct 46 comprises an hot air channel 50 and a cold air channel 52. The air flow Q_hot through the hot air channel 50 has a temperature T_hot and the air flow Q_cold through the cold air channel 52 has a temperature T_cold. Both air flows are mixed wherein the blend door 48 controls the air flow mixing ratio. The resulting air flow Q_mixed has a temperature T_mixed which essentially corresponds to the air discharge temperature of a zone supplied by that duct 46.

The control of the discharge temperature of the duct 46 is based on the energy balance principle. The air flows through the hot and cold channels 50, 52 of the duct 48 can be calculated by solving the following system of equations:

$$Q\_mixed \times T\_mixed = Q\_cold \times T\_cold + Q\_hot \times T\_hot$$

$$Q\_mixed = Q\_cold + Q\_hot$$

T_mixed can be defined as the discharge temperature target. T_cold is essentially determined by a evaporator temperature that can be measured by a temperature sensor. T_hot is essentially determined by a heater-core temperature that can be estimated from the water-coolant temperature and the air flow through the heater-core. Q_mixed is the total air flow that can be estimated from the blower speed and the air distribution position.

Given the knowledge of T_mixed, T_cold, T_hot and Q_mixed, the system of equations can be solved to calculate the amount of hot and cold air flow that is required to provide the targeted discharge temperature.

$$Q\_hot = (Q\_mixed*T\_mixed - Q\_mixed*T\_cold)/(T\_hot - T\_cold)$$

$$Q\_cold = Q\_mixed - Q\_hot$$

Now, it will be explained how the restriction coefficients are calculated from the air flow targets with reference to Fig. 3. which shows a pressure and air flow model of a tri-zone HVAC system using Bond-graph representation. In the model, HVAC distributed air spaces are represented by pressures P separated by air flow restrictions R. Bernoulli's theorem $dP = R*Q^2$ is used for the air flow model. In the Bond-graph representation the pressures P are linked with air flow restrictions R according to the following relation [1]

$$\Delta P = R*Q^2 \tag{1}$$

Q is the total air flow through the restriction R. The following system of equations [2] corresponds to the Bond-graph representation of Fig. 3 and defines a pressure and air flow model of the HVAC system. The method according to the invention solves the system of equations [2] to determine the combination of restrictions that leads to the targeted air flow:

$$P\_evaporator-P\_heater\text{-}core = R\_heater\text{-}core*Q\_heater\text{-}core^2$$

$$P\_evaporator-P\_Left\_mixing = R\_Left\_coid*Q\_Left\_cold^2$$

$$P\_heater\text{-}core-P\_Left\_mixing = R\_Left\_hot^*Q\_Left\ hot^2$$

$$P\_Left\_mixing-P\_cabin = R\_Left\_mode*(Q\_Left\_hot + Q\_Left\_cold)^2$$

$$P\_evaporator - P\_Right\_mixing = R\_Right\_cold * Q\_Right\_cold^2$$

$$P\_heater\text{-}core - P\_Right\_mixing = R\_Right\_hot * Q\_Right\_hot^2$$

$$P\_Right\_mixing - P\_cabin = R\_Right\_mode * (Q\_Right\_hot + Q\_Right\ cold)^2$$

$$P\_evaporator - P\_rear\_mixing = R\_rear\_cold * Q\_rear\_cold^2$$

$$P\_heater\text{-}core - P\_rear\_mixing = R\_rear\_hot * Q\_rear\_hot^2$$

$$P\_rear\ mixing - P\_cabin = R\_rear\_mode * (Q\_rear\_hot + Q\_rear\_cold)^2$$

$$Q\_total = Q\_rear\_cold + Q\_Left\_co!d + Q\_Right\_cold + Q\_heater\text{-}core$$

$$Q\_heater\text{-}core = Q\_Left\_hot + Q\_rear\_hot + Q\_Right\_hot$$

$$R\_Right\_cold = F(R\_Right\_hot)$$

$$R\_Left\_cold = F(R\_Left\_hot)$$

$$R\_Rear\_cold = F(R\_Rear\_hot)$$

A typical relation between the hot and the cold restriction coefficients of a blend door $R\_cold = F(R\_hot)$ is represented in Fig. 5.

The following parameters are known or can be measured:

P_cabin : cabin pressure.

Q_total : total HVAC air flow, calculated in function of the blower voltage.

R_heater-core : heater-core restriction coefficient, which is a constant parameter of the system.

R_Left_mode : Left zone mode restriction coefficient, which is a constant parameter of the system function of the mode position feedback.

R_Right_mode : Right zone mode restriction coefficient, which is a constant parameter of the system function of the mode position feedback.

R_Rear_mode : Rear zone mode restriction coefficient, which is a constant parameter of the system function of the mode position feedback.

Q_Left_cold, Q_Left_hot: air flow target in the left cold and hot channels calculated in step (1) of the method according to the invention.

Q_Right cold, Q_Right_hot: air flow target in the right cold and hot channels calculated in step (1) of the method according to the invention.

Q_rear_cold, Q_rear_hot: air flow target in the rear cold and hot channels calculated in step (1) of the method according to the invention.

The knowledge of the above parameters leads to a system with 15 equations and 12 unknown parameters. Considering that system [2] has a unique solution, a classical recursive algorithm (such as a dichotomy algorithm) may be used to solve it.

The solution of the system gives the combination of blend door restriction coefficients that results in the targeted discharge temperatures:

R_Left_hot, R_Left_cold, R_Right_hot, R_Right_cold, R_Rear_hot, R_Rear_cold

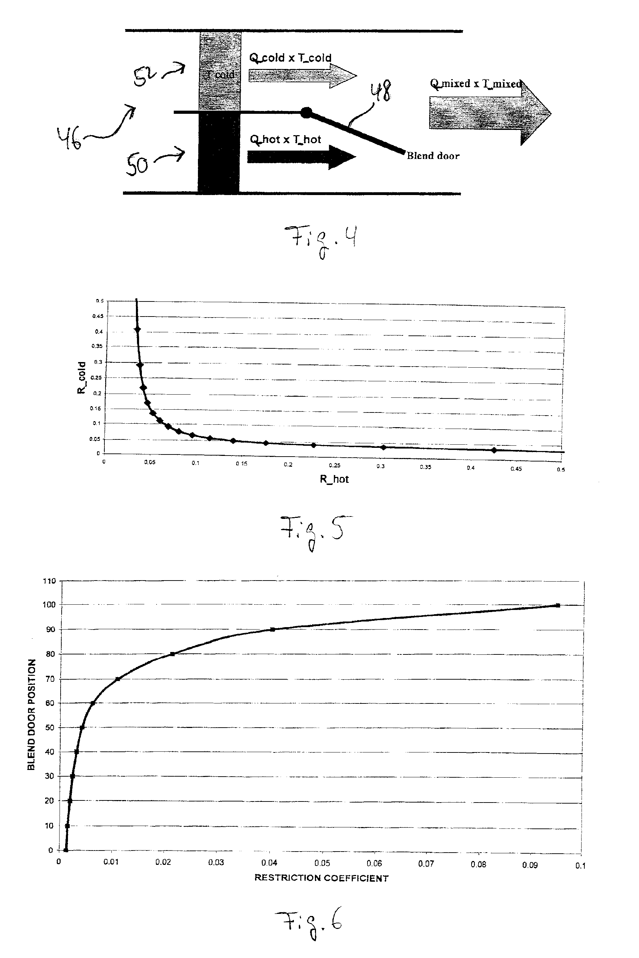

Knowing the restriction coefficients that solve the HVAC pressure-air flow system [2], the method calculates each blend door position according to the relation presented in Fig. 6.

The invention proposes a model based approach for controlling the air discharge temperature of an HVAC system. According to the invention, a numerical model can continuously calculate the air flows and pressures inside the HVAC system, particularly in a HVAC module of the HVAC system. This approach has the advantage that it can be applied to multi-zone HVAC systems. Further, it requires less material and development cost than the prior art methods for the air discharge temperature of an HVAC system.

***List of Reference numerals***

| | |
|---|---|
| 10 | Model based control |
| 12 | HVAC module |
| 14 | Discharge temperature target |
| 16 | Heat exchange model |
| 18 | HVAC air flow model |
| 20 | Air flow targets |
| 22 | Blend door position |
| 24 | Temperature model |
| 26 | Temperature model |
| 28 | Temperature model |
| 30 | Mode restriction model |
| 32 | Mode restriction model |
| 34 | Mode restriction model |
| 36 | Valve restriction model |
| 38 | Valve restriction model |
| 40 | Valve restriction model |
| 42 | Air flow and pressure model |
| 44 | HVAC |
| 46 | Duct |
| 48 | Blend door |
| 50 | Hot air channel |
| 52 | Cold air channel |
| 100 | Temperature sensor |
| 102 | HVAC module |
| 104 | Comparison element |
| 105 | Discharge temperature target |
| 106 | Closed loop controller |
| 107 | Evaporator temperature |
| 108 | Processing element |
| 109 | Heater-core temperature |
| 110 | Table |
| 112 | Dual zone HVAC module |
| 114 | Front blend door |
| 116 | Rear blend door |
| 118 | Front air flow |

120 Heater-core
122 Small amount of rear air flow
124 Front zone
126 Rear zone
128 Rear air flow

**Claims**

1. A method for controlling the air discharge temperature of an HVAC system which comprises means for controlling air flows, **characterised by** the following steps:

   calculating air flows and pressures inside the HVAC system based on discharge temperature targets and a physical model of the HVAC system and

   actuating the means for controlling air flows based on the results of the calculation of air flows and pressures in order to control the air discharge temperature of the HVAC system.

2. The method according to claim 1, wherein the calculation of the air flows and pressures inside the HVAC system comprises the following steps:

   calculating air flow targets from the discharge temperature targets for each zone of the HVAC system by using a temperature-air flow model of a heat exchange of the HVAC system;

   calculating restriction coefficients from the air flow targets by using a pressure-air flow model of the HVAC system; and

   calculating positions of the means for controlling air flows from the restriction coefficients.

3. The method according to claim 2, wherein the step of calculating air flow targets from discharge temperature targets comprises the calculation of the amount of a hot and cold air flow through hot and cold channels of each zone.

4. The method according to claim 3, wherein the hot air flow Q_hot through a hot channel and the cold air flow Q_cold through a cold channel of a zone are calculated by the following equations:

$$Q\_hot = (Q\_mixed*T\_mixed - Q\_mixed*T\_cold)/(T\_hot - T\_cold)$$

$$Q\_cold = Q\_mixed - Q\_hot$$

   wherein Q_mixed is the total air flow provided for the zone, T_hot is the temperature of an heater core of the HVAC system, T_cold is the temperature of an evaporator of the HVAC system, and T_mixed is an air discharge temperature target.

5. The method according to any of claim 2 to 4, **characterised in that** in the pressure-air flow model, air spaces distributed in the HVAC system are represented by pressures P separated by air flow restrictions R, and the pressure-air flow model is defined by a system of equations which link pressures P with the air flow restrictions R, wherein each equation is of the following type: $<P=R*Q^2$, wherein Q is a total air flow through a restriction R.

6. The method according to claim 5, wherein the system of equations defining the pressure-air flow model of the HVAC system is solved using a recursive algorithm, particularly a dichotomy algorithm.

7. The method according to any of claim 2 to 6, wherein the positions of the means for controlling air flows are calculated from the restriction coefficients according to a predefined relation between a restriction coefficient and a position for each one of the means.

8. The method according to any of the preceding claims, wherein the HVAC system comprises several zones and is used in a vehicle for air-conditioning a cabin of the vehicle.

9. A device (10) for controlling the air discharge temperature of an HVAC system which comprises means for controlling air flows, said device (10) being adapted to implement the method according to any of the preceding claims, wherein device (10) comprises

heat exchange model means (16) adapted to generate air flow target signals (20) by calculating air flows and pressures inside the HVAC system based on discharge temperature targets signals (14) and a physical model of the HVAC system, and

air flow model means (18) adapted to generate control signals (22) based on the air flow target signals (20) received from the heat exchange model means (16), said control signals (22) actuate the means for controlling air flows in order to control the air discharge temperature of the HVAC system.

10. The device according to claim 9, further comprising

memory means storing a computer program adapted to implement the heat exchange model means (16) and the air flow model means (18) and

processing means adapted to execute the computer program and to process the discharge temperature targets signals (14) and to generate the control signals (22).

11. The device according to claim 9, further comprising a hard-wired logic adapted to implement the heat exchange model means (16) and the air flow model means (18) and to process the discharge temperature targets signals (14) and to generate the control signals (22).

12. The device according to claim 10 or 11, wherein the computer program or the hard-wired logic comprises a table or function which contain a predefined relation between a restriction coefficient and a position for each one of the means for controlling air flows.

Fig. 1

EP 1 466 764 A1

24

Left zone discharge
temperature target →

Evaporator temperature →   Temperature
                            model
Heater-core temperature →

36

Valve
restriction
model

26

Right zone discharge
temperature target →

Evaporator temperature →   Temperature      Airflow      Airflow and
                            model           targets      pressure
Heater-core temperature →                                model

42

44

Blend door,
Restriction
coefficients

Valve
restriction
model

38

Blend door
position

HVAC

Rear zone discharge
temperature target →

Evaporator temperature →   Temperature
                            model
Heater-core temperature →

Valve
restriction
model

40

28

Mode
Restriction
coefficients

32

Mode
restriction
model

Mode
restriction
model

Mode
restriction     34
model

30

Left zone mode        Right zone mode        Rear zone mode

Fig. 2

Fig. 3

Fig. 4

Fig. 5

Fig. 6

*106*

*104*

Discharge temperature target ——→⊗——→ Discharge temperature error ——→ | Closed loop controller (PID) | ——→ Blend door position ——→ | HVAC | *102*

*105*

Prior art

Discharge temperature ←——— | Duct temperature sensor | *100*

Fig. 7

*107*                          *105*                                  *110*   Prior art                *102*

Discharge temperature target *108*

Evaporator temperature ——→⊗——→ Airflow mixing ratio ——→ | TABLE Blend door mapping | ——→ Blend door position ——→ | HVAC |

Heater-core temperature

*109*

Fig. 8

*124*  Prior art

FRONT ZONE

*118*

*120*

EVAPORATOR

HEATER-CORE

*114*

*122*  *128*  *126*

*116*

REAR ZONE

Fig. 9A

*124*  Prior art

FRONT ZONE

*112*

*120*

EVAPORATOR

HEATER-CORE

*114*

*122*  *128*  *126*

*116*

REAR ZONE

Fig. 9B

# EP 1 466 764 A1

**European Patent Office**

## EUROPEAN SEARCH REPORT

EP 03 10 0958

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 123 146 A (DIAS DOMINIQUE) 26 September 2000 (2000-09-26) | 1,9-11 | B60H1/00 |
| Y | * column 1, line 7 - column 4, line 52 * <br> * column 5, line 15 - column 8, line 18 * <br> * column 10, line 28 - line 38 * <br> --- | 8 | |
| Y | US 2002/014331 A1 (BENDELL ET AL.) 7 February 2002 (2002-02-07) <br> * page 1, paragraph 10 * <br> * page 3, paragraph 34 * <br> --- | 8 | |
| A | US 6 173 902 B1 (BAUER MICHAEL BRADLEY ET AL) 16 January 2001 (2001-01-16) <br> * the whole document * <br> ----- | 1,9 | |

TECHNICAL FIELDS
SEARCHED     (Int.Cl.7)

B60H

The present search report has been drawn up for all claims

| Place of search | Date of completion of the search | Examiner |
|---|---|---|
| THE HAGUE | 4 September 2003 | van der Bijl, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**ANNEX TO THE EUROPEAN SEARCH REPORT
ON EUROPEAN PATENT APPLICATION NO.**

EP 03 10 0958

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2003

| Patent document cited in search report | | Publication date | Patent family member(s) | | Publication date |
|---|---|---|---|---|---|
| US 6123146 | A | 26-09-2000 | FR | 2755068 A1 | 30-04-1998 |
| | | | DE | 69712852 D1 | 04-07-2002 |
| | | | DE | 69712852 T2 | 12-12-2002 |
| | | | EP | 0839678 A1 | 06-05-1998 |
| | | | ES | 2176587 T3 | 01-12-2002 |
| US 2002014331 | A1 | 07-02-2002 | DE | 10037384 A1 | 14-02-2002 |
| | | | FR | 2813560 A1 | 08-03-2002 |
| US 6173902 | B1 | 16-01-2001 | US | 5988517 A | 23-11-1999 |

For more details about this annex : see Official Journal of the European Patent Office, No. 12/82